(19) Europäisches Patentamt European Patent Office Office européen des brevets

(11) **EP 1 213 218 B1**

(12) **EUROPEAN PATENT SPECIFICATION**

(45) Date of publication and mention
of the grant of the patent:
**28.05.2008 Bulletin 2008/22**

(51) Int Cl.:
***B62K 25/04*** *(2006.01)*

(21) Application number: **01128917.0**

(22) Date of filing: **05.12.2001**

(54) **Suspension device for two-wheeled vehicle**

Aufhängungsvorrichtung für ein Zweiradfahrzeug

Dispositif de suspension pour véhicule à deux roues

(84) Designated Contracting States:
**AT BE CH CY DE DK ES FI FR GB GR IE IT LI LU MC NL PT SE TR**

(30) Priority: **06.12.2000 JP 2000371656**

(43) Date of publication of application:
**12.06.2002 Bulletin 2002/24**

(73) Proprietor: **Yamaha Hatsudoki Kabushiki Kaisha Iwata-shi, Shizuoka-ken (JP)**

(72) Inventor: **Sakai, Kouji,
c/o Yamaha Hatsudoki Kabushiki Kaisha Iwata-shi,
Shizuoka-ken (JP)**

(74) Representative: **Grünecker, Kinkeldey,
Stockmair & Schwanhäusser
Anwaltssozietät
Leopoldstrasse 4
80802 München (DE)**

(56) References cited:
**EP-A- 0 891 884        EP-A- 1 099 577
DE-U- 9 415 009**

- **PATENT ABSTRACTS OF JAPAN vol. 1997, no. 11, 28 November 1997 (1997-11-28) -& JP 09 193641 A (YAMAHA MOTOR CO LTD), 29 July 1997 (1997-07-29)**
- **PATENT ABSTRACTS OF JAPAN vol. 018, no. 319 (M-1623), 17 June 1994 (1994-06-17) -& JP 06 072127 A (YAMAHA MOTOR CO LTD), 15 March 1994 (1994-03-15)**
- **PATENT ABSTRACTS OF JAPAN vol. 1996, no. 09, 30 September 1996 (1996-09-30) -& JP 08 132846 A (YAMAHA MOTOR CO LTD), 28 May 1996 (1996-05-28)**
- **PATENT ABSTRACTS OF JAPAN vol. 009, no. 319 (M-439), 14 December 1985 (1985-12-14) -& JP 60 154907 A (YAMAHA HATSUDOKI KK), 14 August 1985 (1985-08-14)**

**EP 1 213 218 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to a suspension device for a two-wheeled vehicle, in particular a motorcycle, comprising first and second hydraulic cylinders respectively suspending front and rear wheels having pistons connected to one end of a piston rod inserted in the hydraulic cylinder and a pressure regulating device.

Heretofore, a system, for example shown in Fig. 4, has been proposed as a suspension for a vehicle (refer to Japanese Unexamined Patent Publication Hei 8-132846).

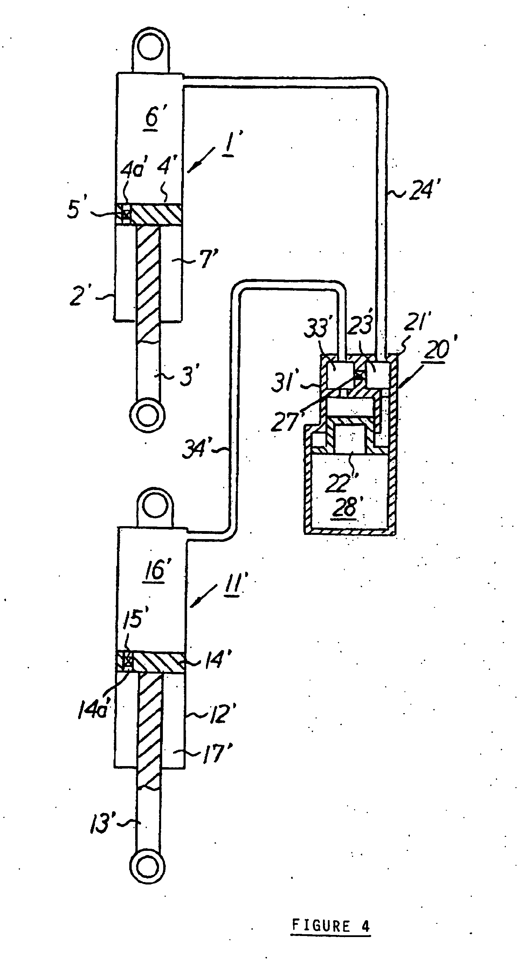

That is, Fig. 4 is a diagrammatic sectional illustration of the construction of a conventional suspension for a vehicle, and this suspension for a vehicle comprises an oil cylinder 1' for suspending the front wheel, an oil cylinder 11' for suspending the rear wheel, and a pressure regulating device 20'.

The oil cylinders 1', 11' are arranged such that pistons 4', 14' connected to the lower ends of piston rods 3', 13' inserted from below into cylinders 2', 12', are disposed in the cylinders 2', 12' for sliding movement; upper oil chambers 6', 16' and lower oil chambers 7', 17' defined by pistons 4', 14' in the cylinders 2', 12' are filled with oil; and in oil holes 4a', 14a' are provided chokes 5', 15'.

The pressure regulating device 20' is arranged such that a first pressure regulating cylinder 21' having a first oil chamber 23' in communication with the upper oil chamber 6' of the oil cylinder 1' for the front wheel through an oil path 24' and a second pressure regulating cylinder 31' having a second oil chamber 33' in communication with the upper oil chamber 16' of the oil cylinder 11' for the rear wheel through an oil path 34', are formed integrally; and the two oil chambers 23', 33' and a gas chamber 28' are defined by one free piston 22' as a movable partition. Between the first oil chamber 23' and the second oil chamber 33' is provided a choke 27'. The free piston 22' is formed such that effective sectional areas of the first oil chamber 23' and the second oil chamber 33' are equal to each other.

In cases where such a suspension as described above is applied to a motorcycle, at the time of bouncing when the oil cylinder 1' for the front wheel and the oil cylinder 11' for the rear wheel are operated in the same direction with approximately the same amount of movement, the damping force should be generated in the oil cylinders 1' 11' only by chokes 5', 15' provided in the piston 4', 14'. However, in the motorcycle, because of the difference in the type of the front and rear wheels and unequal weight distribution between front and rear wheels, a problem is raised that an unnecessary additional damping force is generated by oil passing through the choke 27' of the pressure regulating device 20'.

On the other hand, when the oil cylinder 1' for the front wheel and the oil cylinder 11' for the rear wheel are operated in the different directions, in addition to damping forces generated by chokes 5', 15' provided in the piston 4', 14' in the oil cylinders 1', 11', an additional damping force is generated also in the choke 27' of the pressure regulating device 20'. Thus, the damping force increases relatively during rapid deceleration and rapid acceleration of a motorcycle, restricting diving of the vehicle body during rapid deceleration and squatting of the vehicle body during its rapid acceleration.

However in the motorcycle, because of the difference in the type of the oil cylinders 1', 11' between the front and rear wheels and unequal weight distribution between front and rear wheels, as described above, a problem is raised that the magnitude of the additional damping force is different significantly between diving and squatting.

Accordingly, it is an objective of the present invention to provide an improved suspension device as indicated above enabling control of the additional damping force.

This objective is solved by a suspension device with the features defined in claim 1.

Therefore, even if sectional areas a1, a2 of the piston rods of the first and second oil cylinders for supporting the front and rear wheels of a motorcycle, respectively, are different from each other, or ratios (S1/$\lambda$1), (S2/$\lambda$2) of piston strokes S1, S2 to the amounts of displacement $\lambda$1, $\lambda$2 of the front and rear wheels are different from each other, an oil flow through either choke provided in the communication passage for providing communication between the first and second oil chambers of the first and second pressure regulating cylinders, can be prevented to the bouncing motion in which the direction and the amount of displacement of the front wheel are approximately equal to those of the rear wheel, preventing generation of an unnecessary additional damping force to the bouncing motion of the vehicle body.

Thus, within the suspension device according to this embodiment, no unnecessary additional damping force to the bouncing motion of the vehicle body is generated.

According to a preferred embodiment of the suspension device, the communication passage comprises a first and a second choke, wherein the first choke provides hydraulic liquid flow from the first to the second hydraulic chamber and the second choke from the second to the first hydraulic chamber.

It is preferable if effective sectional areas of the first and second pressure regulating cylinders are set at different values.

It is further preferable if a ratio of an amount of displacement of the front and rear wheels to piston strokes of the respective hydraulic cylinders are set at different values.

It is also beneficial if the free pistons are connected by a connecting member such that volume changes of said first and second hydraulic chambers are in agreement with each other.

It is further beneficial if a mutual gas chamber is formed in the first and the second pressure regulating cylinders, wherein the mutual gas chamber contains an inert gas.

According to a further preferred embodiment of the suspension device, absolute values of a displacement velocity of the front and rear wheels are set equal, and the relation $(S1/\lambda1) \times (a1/A1) \times \Delta\phi \approx (S2/\lambda2) \times (a2/A2) \times \Delta\phi'$ applies, wherein $\Delta\phi$ is a pressure difference between the hydraulic chambers when a hydraulic liquid flows from the first hydraulic chamber to the second hydraulic chamber, $\Delta\phi'$ is a pressure difference between the hydraulic chambers when a hydraulic liquid flows from the second hydraulic chamber to the first hydraulic chamber.

Within this embodiment, it is further preferable if at least one value of pairs of values of a1 and a2, S1/$\lambda$1 and S2/$\lambda$2, and a damping force characteristic of hydraulic liquid flowing from the first to the second hydraulic chamber through one choke and a damping force characteristic of hydraulic liquid flowing from the second to the first hydraulic chamber through the other choke, is set to be different from the other,
wherein S1 and S2 are the piston strokes of said first and second hydraulic cylinders, a1 and a2 are sectional areas of the piston rods of said first and second hydraulic cylinders, $\lambda$1 and $\lambda$2 are amounts of vertical displacement of the front and rear wheels at grounding points for the piston strokes S1 and S2 of the first and second hydraulic cylinders.

Thus, even if, of a case where sectional areas a1, a2 of the piston rods of the first and second oil cylinders are different from each other, a case where ratios (S1/$\lambda$1), (S2/$\lambda$2) of the piston strokes S1, S2 to the amounts of displacement $\lambda$1, $\lambda$2 of the front and rear wheels are different from each other, and a case where effective sectional areas A1, A2 of the first and second pressure regulating cylinders are different from each other, the condition of at least any one of these cases is satisfied, changes in the magnitude of the additional damping force, generated in either choke provided in the communication passage for providing communication between the first and second oil chambers of the first and second pressure regulating cylinders, due to the flowing direction of oil in the choke, can be prevented, so that the magnitude of the additional damping force can be balanced to the diving and squatting motion of the vehicle body.

Therefore, according to this embodiment, there is provided a suspension device in which the magnitude of the additional damping force can be balanced to the diving an squatting motion of the vehicle body.

In the following, the present invention is explained in greater detail with respect to several embodiments thereof in conjunction with the accompanying drawings, wherein:

Fig. 1 is a schematic side view of a motorcycle with a suspension for a motorcycle;

Fig. 2 is a diagrammatic sectional illustration of the construction of the suspension for a motorcycle;

Fig. 3 is a sectional view showing the construction of a leakage detection device; and

Fig. 4 is a diagrammatic sectional illustration of the construction of a conventional suspension for a motorcycle.

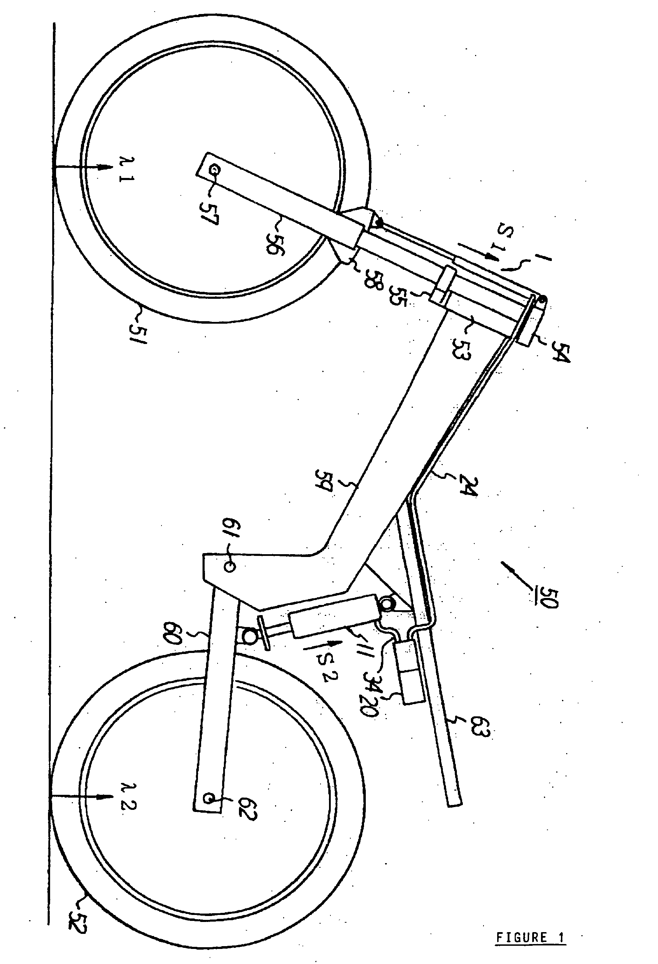

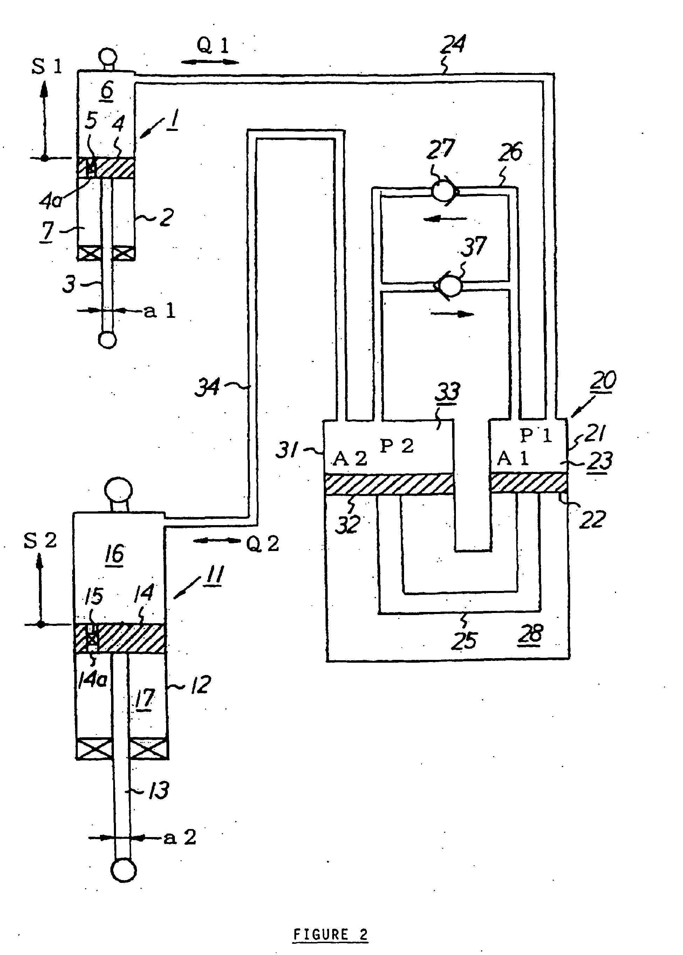

Fig. 1 is a schematic side view of a motorcycle with a suspension; and Fig. 2 is a diagrammatic illustration of the construction of the suspension.

In a motorcycle 50 shown in Fig. 1, numeral 53 designates a head pipe located at the upper front of the vehicle body, and in the head pipe 53 is inserted a steering shaft (not shown) for rotation. To the steering shaft is mounted a front fork 56 through an upper bracket 54 and a lower bracket 55, and at the lower ends of the front fork 56 is supported a front wheel 51 on an axle 57 for rotation.

In front of the front fork 56 is disposed an oil cylinder (hydraulic chamber) 1, and the upper end of the oil cylinder (hydraulic cylinder) 1 is attached to the upper bracket 54 on the body side, and its lower end to a bracket 58 on the front wheel side.

On the other hand, a main frame 59 extends from the head pipe 53 obliquely downwardly toward the rear of the vehicle body, and to the rear end of the main frame 59 is mounted the forward end of a rear arm 60 on a pivot shaft 61 for rotation. At the rear ends of the rear arm 60 is supported a rear wheel 52 on an axle 62 for rotation.

From the middle section of the main frame 59, a pair of left and right seat rail frames 63 extend obliquely upwardly toward the rear, and between the seat rail frames 63 and the rear arm 60 is disposed an oil cylinder (hydraulic cylinder) 11.

In addition, to the seat rail frames 63 is attached a pressure regulating device 20, and to the pressure regulating device 20 are connected the oil cylinders (hydraulic cylinders) 1, 11 through oil paths 24, 34.

The suspension for a motorcycle according to this embodiment includes the oil cylinders (hydraulic cylinders) 1, 11 and the pressure-regulating device 20, the construction of which will be described in detail with reference to Fig. 2.

The oil cylinders 1, 11 on the front wheel 51 and the rear wheel 52 side are arranged such that pistons 4, 14 connected to the upper ends of piston rods 3, 13 inserted into cylinders 2, 12 from above, are inserted in the cylinders 2, 13 for sliding movement; upper oil chambers 6, 16 and lower oil chambers 7, 17 defined by the pistons 4, 14 in the cylinders 2, 12 are filled with oil; and chokes 5, 15 are disposed in oil holes 4a, 14a formed in the pistons 4, 14. In this embodiment, although the oil cylinder 11 on the rear wheel 52 side is constituted by a shock absorber, this may be a special cylinder, like the oil cylinder 1 on the front wheel 51 side.

Here, for the oil cylinder 1 on the front wheel 51 side is used an oil cylinder smaller (in diameter) than the oil cylinder 11 on the rear wheel 52 side, and sectional areas a1, a2 of the piston rods 3, 13 in the oil cylinders 1, 11 are set at different values.

The ratio (hereinafter referred to as the lever ratio) of the amounts of displacement of the first and rear wheels 51, 52 to the piston strokes of the oil cylinders 1, 11 are also set at different values. Specifically, supposing the amounts of vertical displacement at grounding points of the front and rear wheels 51, 52 be $\lambda1$, $\lambda2$ for the piston strokes S1, S2 of the oil cylinders 1, 11, as shown in Fig. 1, the lever ratio (S1/$\lambda1$) on the front wheel 51 side and the lever ratio (S2/$\lambda2$) on the rear wheel 52 side are set at different values.

On the other hand, the pressure regulating device 20 is arranged such that movable partitions or free pistons 22, 23 are fitted, for sliding movement, in first and second pressure regulating cylinders 21, 31 connected together; a first oil chamber 23 defined by the free piston 22 in the first pressure regulating cylinder 21 is in communication with the upper oil chamber 6 of the oil cylinder 1 on the front wheel 51 side through the oil path 24; and a second oil chamber 33 defined by the free piston 32 in the second pressure regulating cylinder 31 is in communication with the upper oil chamber 16 of the oil cylinder 11 on the rear wheel 52 side through the oil path 34. Effective sectional areas A1, A2 of the first and second pressure regulating cylinders 21, 31 are set at different values.

Here, the free pistons 22, 32 are connected by a connecting member 25 such that volume changes of the first and second oil chambers 23, 33 are in agreement with each other. In addition, the first oil chamber 23 and the second oil chamber 33 are in communication with each other through a communication passage 26, and in the communication passage 26 are provided a first choke 27 and a second choke 37. The first choke 27 allows an oil flow from the first oil chamber 23 to the second oil chamber 33, and the second choke 37 conversely from the second oil chamber 33 to the first oil chamber 23.

In the first and second pressure regulating cylinders 21, 31 is formed a common gas chamber 28 defined by the free pistons 22, 32; the first and second oil chambers 23, 33 are filled with oil; and the gas chamber 28 contains inert gas. Here, the pressure in the first oil chamber is represented by P1 and the pressure in the second chamber by P2.

Thus, if the front and rear wheels 51, 52 moves vertically following the irregularities of the road surface during running of the motorcycle 50 shown in Fig. 1, the oil cylinders 1, 11 constituting the suspension are operated to generate a required damping force.

Specifically, to the bouncing motion in which the direction and the amount of displacement of the front wheel 51 and those of the rear wheel 52 are approximately the same, the cylinders 2, 12 of the oil cylinders 1, 11 and the piston rods 3, 13 extend and contract, causing the pistons 4, 14 to slide in the cylinders 2, 12, so that the shock the front and rear wheels 51, 52 receives from the road surface is absorbed by the damping force generated when oil passes through the chokes 5, 15 provided in the oil holes 4a, 14a in the pistons 4, 14. In this case, amounts of oil in the cylinders 2, 12 of the oil cylinders 1,11 increase/decrease by as much quantity as volume changes of the cylinders 2, 12 in association with the extending and retracting movement of the piston rods 3, 13, respectively; the increased/decreased amounts of oil travel through oil paths 24, 34 between the upper oil chambers 6, 16 in the oil cylinders 1, 11 and the first and second oil chambers 23, 33 of the pressure regulating cylinders 21, 31, respectively, causing the free piston 22, 32 to slide in the pressure regulating cylinders 21, 31 in one body; and the changes in the amount of oil are relieved by gas being compressed and expanded in the gas chamber 28.

Here, if the increased/decreased amount of oil Q1 in the oil cylinder 1 on the front wheel 51 side is not equal to the increased/decreased amount of oil Q2 in the oil cylinder 11 on the rear wheel 52 side (Q1 ≠ Q2), in the pressure regulating device 20, the differential amount of oil (|Q1-Q2|) of Q1 and Q2 flows from the first oil chamber 23 to the second oil chamber 33 through the first choke 27, or conversely, from the second oil chamber 33 to the first oil chamber 23 through the second choke 37, so that an unnecessary additional damping force is generated when the oil passes through the choke 27 or 37.

In view of the foregoing, this inventor has found that supposing piston strokes of the oil cylinders 1, 11 be S1 and S2, sectional areas of the piston rods 3, 13 be a1 and a2, and amounts of vertical displacement of the front and rear wheels 51, 52 at the grounding points be $\lambda1$ and $\lambda2$, if between these variables, at least either one of expressions a1 ≠ a2 and S1/ $\lambda1$ ≠ S2/ $\lambda2$ is satisfied, and the following relation holds:

$$(S1/ \lambda1) \times (a1/A1) \approx (S2/ \lambda2) \times (a2/A2) \qquad (1),$$

generation of an unnecessary additional damping force to the bouncing motion can be prevented.

According to this relation, the term (S1/$\lambda1$) x (a1/A1) on the left side is nearly equal to the term (S2/$\lambda2$) x (a2/A2) on the right side, including equality. However, equality when controlling the oil pressure in the system is an ideal state, as it is difficult to establish an equal pressure in two different oil chambers. Thus, under normal circumstances the oil pressure is controlled as nearly equal.

As a result, even if areas a1, a2 of the piston rods 3, 13 in the oil cylinders 1, 11 on the front wheel 51 and rear wheel 52 side of the motorcycle 50 are different from each other, or ratios (S1/ $\lambda$1, S2/$\lambda$2) of piston strokes S1, S2 to the amounts of displacement $\lambda$1, $\lambda$2 of the front and rear wheels 51, 52 are different from each other, an oil flow through either of the chokes 27, 37 provided in the communication passage 26 for providing communication between the first and second oil chambers 23, 33 of the first and second pressure regulating cylinders 21, 31, can be prevented to the bouncing motion in which the direction and the amount of displacement of the front wheel 51 and those of the rear wheel 52 are approximately the same, preventing generation of an unnecessary additional damping force to the bouncing motion of the vehicle body.

On the other hand, if the oil cylinder 1 on the front wheel 51 side and the oil cylinder 11 on the rear wheel 52 side are operated in the different directions, oil equivalent to volume changes of the cylinders 2, 12 in association with the extending and retracting movement of the piston rods 3, 13 flows through the choke 27 or 37 of the pressure regulating device 20 to thereby generate an additional damping force, and this additional damping force is added to damping forces generated in the oil cylinders 1, 11, so that operations of the oil cylinders 1, 11 in the different directions are restricted, preventing diving or squatting of the vehicle body.

Specifically, during rapid deceleration, the oil cylinder 1 on the front wheel 51 side is compressed and the oil cylinder 11 on the rear wheel 52 side is extended, so that oil is discharged from the oil cylinder 1 on the front wheel 51 side and flows into the oil cylinder 11 on the rear wheel 52 side. Thus, the oil discharged from the oil cylinder 1 on the front wheel 51 side flows through the oil path 24 into the first oil chamber 23 of the pressure regulating device 20, and part of the oil flows through the first choke 27 to the second oil chamber 33, so that an additional damping force is generated when the part of the oil passes through the first choke 27.

Also, during rapid acceleration, the oil cylinder 1 on the front wheel 51 side is extended and the oil cylinder 11 on the rear wheel 52 side is compressed, so that oil flows into the oil cylinder 1 on the front wheel 51 side and is discharged from the oil cylinder 11 on the front wheel 52 side. Thus, the oil discharged from the oil cylinder 11 on the rear wheel 52 side flows through the oil path 34 into the second oil chamber 33 of the pressure regulating device 20, and part of the oil flows through the second choke 37 to the first oil chamber 23, so that an additional damping force is generated when the part of the oil passes through the second choke 37.

However, if the additional damping force generated during rapid deceleration and that generated during rapid acceleration are not approximately equal to each other, no appropriate control of the swinging movement of the vehicle body is possible.

In view of the foregoing, this inventor has found that when the vehicle body is subjected to pitching and the front and rear wheels 51, 52 are displaced in the opposite directions, if absolute values of the displacement velocity of the front and rear wheels 51, 52 are the same (d $\lambda$ 1/dt = -d $\lambda$ 2/dt), and the following relation holds:

$$(S1/ \lambda 1) \times (a1/A1) \times \Delta\phi \approx (S2/ \lambda 2) \times (a2/A2) \times \Delta\phi' \quad (2),$$

the additional damping force generated during rapid deceleration and that generated during rapid acceleration are approximately equal, including equality.

Here, $\Delta \phi$ in the relation (2) represents the pressure difference (P1-P2) between two oil chambers 23, 33 when oil flows from the first oil chamber 23 to the second oil chamber 33, and $\Delta\phi'$ the pressure difference (P1-P2) between two oil chambers 23, 33 when oil flows from the second oil chamber 33 to the first oil chamber 23.

The relation (2) is derived such that a first condition under which the additional damping force generated in the first choke 27 during rapid deceleration is equal to that generated in the second choke 37 during rapid acceleration and a second condition under which the additional damping force generated in the second choke 37 during rapid deceleration is equal to that generated in the first choke 27 during rapid acceleration, are determined, and both of these two conditions are satisfied. Description of the procedure for the relation (2) is omitted (refer to Japanese Patent Application Hei 2000-003385 for details).

Therefore, in this embodiment, even if, of a case where sectional areas a1, a2 of the piston rods 3, 13 of the oil cylinders 1, 11 are different from each other, a case where ratios (S1/$\lambda$1), (S2/ $\lambda$2) of piston strokes S1, S2 to the amounts of displacement $\lambda$1, $\lambda$2 of the front and rear wheels 51, 52 are different from each other, and a case where effective sectional areas A1, A2 of the first and second pressure regulating cylinders 21, 31 are different from each other, the condition of at least any one of these cases is satisfied, changes in the magnitude of the additional damping force generated in the chokes 27, 37 provided in the communication passage 26 for providing communication between the first and second oil chambers 23, 33 of the first and second pressure regulating cylinders 21, 31, due to the flowing direction of oil in the chokes 27, 37, can be prevented, so that the magnitude of the additional damping force can be balanced to the diving and squatting motion of the vehicle body.

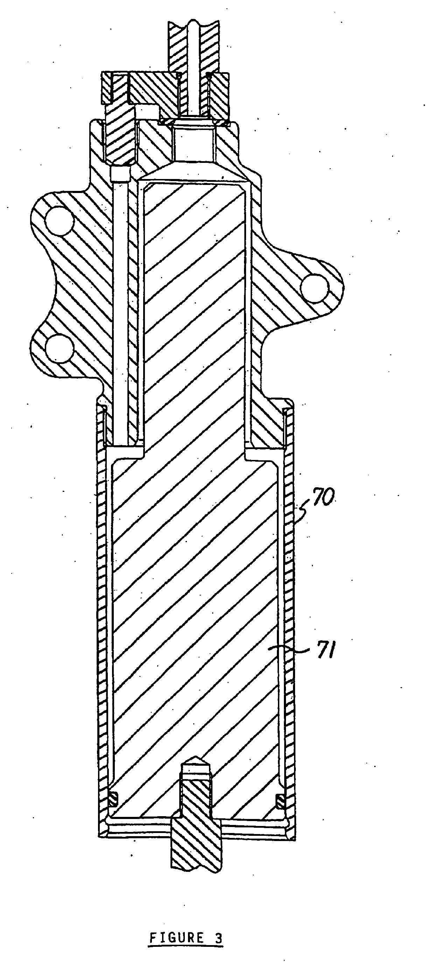

Now, referring to Fig. 3, a leakage detection device of a pressure container will be described. Fig. 3 is a sectional view showing the construction of the leakage detection device.

When inspection is performed of a pressure container with a large opening at one end as in the cylinder of a hydraulic shock absorber, the opening is closed air-tightly by a lid member to pressurize/depressurize the interior of the container, and it is determined whether or not leakage happened, from a change in the internal pressure after a given elapsed time.

However, since in the conventional method, the change in the internal pressure over time is small because of large volume of the pressure container, detection accuracy is low and a long detection time is required.

In order to solve the problem, as shown in Fig. 3, a lid member 71 for closing the opening of the pressure container 70 is disposed in the pressure container 70 so that the volume of the pressure container 70 will be decreased by as much volume as the lid member 71. Therefore, the volume of the pressure container 70 can be kept far smaller than a conventional container, so that leakage inspection of the pressure container 70 can be performed in a short time with higher accuracy.

The embodiments described above refer to a suspension for a motor cycle comprising first and second oil cylinders each having a piston connected to one end of a piston rod inserted in the cylinder, said first and second oil cylinders suspending front and rear wheels, respectively; a first pressure regulating cylinder having a first oil chamber in communication with said first oil cylinder and a movable partition fitted in said first oil chamber for sliding movement; a second pressure regulating cylinder having a second oil chamber in communication with said second oil cylinder and a movable partition fitted in said second oil chamber for sliding movement; said movable partitions being connected to each other such that volume changes of said first and second oil chambers in both pressure regulating cylinders being in agreement with each other; and chokes disposed in a communication passage for providing communication between said first and second oil chambers, wherein supposing piston strokes of said first and second oil cylinders be S1 and S2, sectional areas of the piston rods be a1 and a2, amounts of vertical displacement of the front and rear wheels at grounding points be $\lambda1$ and $\lambda2$ for the piston strokes S1 and S2 of the first and second oil cylinders, and effective sectional areas of said first and second pressure regulating cylinders be A1 and A2, at least either one of expressions a1 $\neq$ a2 and S1/$\lambda1$ $\neq$ S2/$\lambda2$ is satisfied, and the following relation holds:

$$(S1/\lambda1) \times (a1/A1) \approx (S2/\lambda2) \times (a2/A2).$$

As is clear from the foregoing description, even if sectional areas a1, a2 of the piston rods of the first and second oil cylinders for supporting the front and rear wheels of a motorcycle, respectively, are different from each other, or ratios (S1/$\lambda1$), (S2/$\lambda2$) of piston strokes S1, S2 to the amounts of displacement $\lambda1$, $\lambda2$ of the front and rear wheels are different from each other, an oil flow through either choke provided in the communication passage for providing communication between the first and second oil chambers of the first and second pressure regulating cylinders, can be prevented to the bouncing motion in which the direction and the amount of displacement of the front wheel are approximately equal to those of the rear wheel, preventing generation of an unnecessary additional damping force to the bouncing motion of the vehicle body.

It is preferable if supposing pressures of the first and second oil chambers in said first and second pressure regulating cylinders be P1 and P2, a pressure difference between oil chambers when oil flows from the first oil chamber to the second oil chamber be $\Delta\phi$, and a pressure difference between oil chambers when oil flows from the second oil chamber to the first oil chamber be $\Delta\phi'$, and when, of pairs of values of a1 and a2, S1/$\lambda1$ and S2/$\lambda2$, and a damping force characteristic of oil flowing from the first oil chamber of the first pressure regulating cylinder to the second oil chamber of the second pressure regulating cylinder through one choke and a damping force characteristic of oil flowing from the second oil chamber of the second pressure regulating cylinder to the first oil chamber of the first pressure regulating cylinder through the other choke, one value of at least any one of said pairs of values is set to be different from the other, the front and rear wheels are displaced in the opposite directions, and absolute values of the displacement velocity are the same, the following relation holds:

$$(S1/\lambda1) \times (a1/A1) \times \Delta\phi \approx (S2/\lambda2) \times (a2/A2) \times \Delta\phi'.$$

Thus, even if, of a case where sectional areas a1, a2 of the piston rods of the first and second oil cylinders are different from each other, a case where ratios (S1/$\lambda1$), (S2/$\lambda2$) of the piston strokes S1, S2 to the amounts of displacement $\lambda1$, $\lambda2$ of the front and rear wheels are different from each other, and a case where effective sectional areas A1, A2 of the first and second pressure regulating cylinders are different from each other, the condition of at least any one of these cases is satisfied, changes in the magnitude of an additional damping force, generated in either choke provided in the communication passage for providing communication between the first and second oil chambers of the first and second pressure regulating cylinders, due to the flowing direction of oil in the choke, can be prevented, so that the magnitude of the additional damping force can be balanced to the diving and squatting motion of the vehicle body.

Accordingly, there is provided a suspension for a motorcycle in which no unnecessary additional damping force to the bouncing movement of the vehicle body is generated, wherein supposing piston strokes of the first and second oil cylinders 1, 11 be S1 and S2, sectional areas of the piston rods 3, 13 be a1 and a2, amounts of vertical displacement of the front and rear wheels at grounding points be $\lambda 1$ and $\lambda 2$ for the piston strokes S1 and S2 of the first and second oil cylinders 1, 11, and effective sectional areas of the first and second pressure regulating cylinders 21, 31 be A1 and A2, at least either one of expressions $a1 \neq a2$ and $S1/\lambda 1 \neq S2/\lambda 2$ is satisfied, and the following relation holds:

$$(S1/\lambda 1) \times (a1/A1) \approx (S2/\lambda 2) \times (a2/A2).$$

## Claims

1. A suspension device for a two-wheeled vehicle, in particular a motorcycle, comprising first and second hydraulic cylinders (1,11) respectively suspending front and rear wheels having pistons (4,14) connected to one end of piston rods (3,13) inserted in the hydraulic cylinders (4,14), and a pressure regulating device (20) with first and second pressure regulating cylinders (21,31) having hydraulic chambers (23,33) respectively in communication with one of said hydraulic cylinders (1,11), a communication passage (26) for providing communication between said hydraulic chambers (23,33) and at least one movable partition (22,32), wherein the first and the second pressure regulating cylinders (21,31) each comprise a slidable free piston (22,32) as a movable partition, and a first hydraulic chamber (23) is constituted by the first pressure regulating cylinder (21) and the respective movable partition (22) and a second hydraulic chamber (33) is constituted by the second pressure regulating cylinder (31) and the respective movable partition (32), and wherein at least either one of relations

$$a1 \neq a2 \text{ and } S1/\lambda 1 \neq S2/\lambda 2$$

   is satisfied and the relation

$$(S1/\lambda 1) \times (a1/A1) \approx (S2/\lambda 2) \times (a2/A2)$$

   applies, wherein S1 and S2 are piston strokes of said first and second hydraulic cylinders, a1 and a2 are sectional areas of the piston rods, $\lambda 1$ and $\lambda 2$ are amounts of vertical displacement of the front and rear wheels at grounding points for the piston strokes S1 and S2 of the first and second hydraulic cylinders, and A1 and A2 are effective sectional areas of said first and second pressure regulating cylinders.

2. A suspension device for a two-wheeled vehicle according to claim 1, wherein the communication passage (26) comprises a first and a second choke (27,37), wherein the first choke (27) provides hydraulic liquid flow from the first (23) to the second hydraulic chamber (33) and the second choke (37) from the second (33) to the first hydraulic chamber (23).

3. A suspension device for a two-wheeled vehicle according to claim 1 or 2, wherein effective sectional areas (A1,A2) of the first and second pressure regulating cylinders (21,31) are set at different values.

4. A suspension device for a two-wheeled vehicle according to at least one of the preceding claims 1 to 3, wherein a ratio of an amount of displacement of the front and rear wheels (52,53) to piston strokes of the respective hydraulic cylinders (1,11) are set at different values.

5. A suspension device for a two-wheeled vehicle according to at least one of the preceding claims 1 to 4, wherein the free pistons (22,32) are connected by a connecting member (25) such that volume changes of said first and second hydraulic chambers (23,33) are in agreement with each other.

**6.** A suspension device for a two-wheeled vehicle according to at least one of the preceding claims 1 to 5, wherein a mutual gas chamber (28) is formed in the first and the second pressure regulating cylinders (21,31), wherein the mutual gas chamber (28) contains an inert gas.

**7.** A suspension device for a two-wheeled vehicle according to at least one of the preceding claims 1 to 6, wherein absolute values of a displacement velocity of the front and rear wheels (51,52) are set equal, and the relation

$$(S1/\lambda1) \times (a1/A1) \times \Delta\phi \approx (S2/\lambda2) \times (a2/A2) \times \Delta\phi'$$

applies, wherein $\Delta\phi$ is a pressure difference between the hydraulic chambers when a hydraulic liquid flows from the first hydraulic chamber to the second hydraulic chamber, $\Delta\phi'$ is a pressure difference between the hydraulic chambers when a hydraulic liquid flows from the second hydraulic chamber to the first hydraulic chamber.

**8.** A suspension device for a two-wheeled vehicle according to claim 7, wherein at least one value of pairs of values of a1 and a2, S1/λ1 and S2/λ2, and a damping force characteristic of hydraulic liquid flowing from the first to the second hydraulic chamber through one choke and a damping force characteristic of hydraulic liquid flowing from the second to the first hydraulic chamber through the other choke, is set to be different from the other, wherein S1 and S2 are the piston strokes of said first and second hydraulic cylinders (1,11), a1 and a2 are sectional areas of the piston rods (4,14) of said first and second hydraulic cylinders (1,11), λ1 and λ2 are amounts of vertical displacement of the front and rear wheels (51,52) at grounding points for the piston strokes S1 and S2 of the first and second hydraulic cylinders (1,11).

**Patentansprüche**

**1.** Aufhängungsvorrichtung für ein zweirädriges Fahrzeug, insbesondere ein Motorrad, aufweisend erste und zweite Hydraulikzylinder (1, 11), die jeweils das Vorder- und Hinterrad aufhängen, mit Kolben (4, 14) verbunden, mit einem Ende der Kolbenstangen (3, 13), die in die Hydraulikzylinder (1, 11) eingesetzt sind, und eine Druckregelvorrichtung (20) mit ersten und zweiten Druckregelzylindern (21, 31), die Hydraulikkammern (23, 33), jeweils in Verbindung mit einem der Hydraulikzylinder (1, 11) haben, einen Verbindungskanal (28) zum Schaffen einer Verbindung zwischen den Hydraulikkammern (23, 33) und zumindest einer bewegbaren Unterteilung (22, 32), wobei die ersten und zweiten Druckregelzylinder (21, 31) jeweils aufweisen einen gleitbaren freien Kolben (32, 32) als eine bewegbare Unterteilung, und eine erste Hydraulikkammer (23) durch das erste Druckregelventil (21) und die jeweilige bewegbare Unterteilung (22) gebildet ist, und eine zweite Hydraulikkammer (33) durch den zweiten Druckregelzylinder (31) und die jeweilige bewegbare Unterteilung (32) gebildet ist, und wobei zumindest einer der Beziehungen

$$a1 \neq a2 \text{ und } S1/\lambda \neq S2/\lambda2) \times (a2/A2)$$

genügt wird und die Beziehung

$$(S1/\lambda1) \times (a1/A1) \approx (S2/\lambda2) \times (a2/A2)$$

gilt, wobei S1 und S2 Kolbenhübe der ersten und zweiten Hydraulikzylinder sind, a1 und a2 Querschnittflächen der Kolbenstangen sind, λ1 und λ2 Größen der vertikalen Verlagerung des Vorder- und Hinterrades an bodenberührenden Punkten für die Kolbenhübe S1 und S2 der ersten und zweiten Hydraulikzylinder sind, und A1 und A2 effektive Querschnittflächen der ersten und zweiten Druckregelzylinder sind.

**2.** Aufhängungsvorrichtung für ein zweirädriges Fahrzeug nach Anspruch 1, wobei der Verbindungskanal (26) eine erste und zweite Drosselstelle (27, 37) aufweist, wobei die erste Drosselstelle (27) eine erste hydraulische Flüssigkeitsströmung aus der ersten (23) in die zweite Hydraulikkammer (33) und die zweite Drosselstelle (37) aus der zweiten (33) in die erste Hydraulikkammer (23) schafft.

**3.** Aufhängungsvorrichtung für ein zweirädriges Fahrzeug nach Anspruch 1 oder 2, wobei effektive Querschnittsflächen (A1, A2) des ersten und zweiten Druckregelzylinders (21, 31) auf unterschiedliche Werte festgelegt werden.

4.  Aufhängungsvorrichtung für ein zweirädriges Fahrzeug nach zumindest einem der vorhergehenden Ansprüche 1 bis 3, wobei ein Verhältnis einer Größe der Verlagerung des Vorder- und des Hinterrades (52, 53) zu den Kolbenhüben der jeweiligen Hydraulikzylinder (1, 11) auf unterschiedliche Werte festgelegt wird.

5.  Aufhängungsvorrichtung für ein zweirädriges Fahrzeug nach zumindest einem der vorhergehenden Ansprüche 1 bis 4, wobei die freien Kolben (22, 32) jeweils durch ein Verbindungsteil (25) derart verbunden sind, dass Volumenänderungen der ersten und zweiten Hydraulikkammern (23, 33) miteinander in Übereinstimmung sind.

6.  Aufhängungsvorrichtung für ein zweirädriges Fahrzeug nach zumindest einem der vorhergehenden Ansprüche 1 bis 5, wobei eine gegenseitige Gaskammer (28) in dem ersten und zweiten Druckregelzylinder (21, 31) gebildet ist, wobei die gegenseitige Gaskammer (28) ein inertes Gas enthält.

7.  Aufhängungsvorrichtung für ein zweirädriges Fahrzeug nach zumindest einem der vorhergehenden Ansprüche 1 bis 6, wobei die absoluten Werte einer Verlagerungsgeschwindigkeit des Vorder- und des Hinterrades (51, 52) gleich festgelegt werden, und die Beziehung

$$(S1/ \lambda 1) \times (a1/A1) \times \Delta\Phi \approx (S2/ \lambda 2) \times (a2/A2) \times \Delta\Phi'$$

gilt, wobei $\Delta\phi$ eine Druckdifferenz zwischen den Hydraulikkammern ist, wenn eine Hydraulikflüssigkeit aus der ersten Hydraulikkammer fließt, $\Delta\phi$ eine Druckdifferenz zwischen den Hydraulikkammern ist, wenn Hydraulikflüssigkeit aus der zweiten Hydraulikkammer in die erste Hydraulikkammer fließt.

8.  Aufhängungsvorrichtung für ein zweirädriges Fahrzeug nach Anspruch 7, wobei zumindest ein Wert der Wertepaare von a1 und a2, S1/$\lambda$1 und S2/$\lambda$2 und ein Dämpfungskraftcharakteristik der Hydraulikflüssigkeit, die aus der ersten in die zweite Hydraulikkammer durch eine Drosselstelle fließt, und ein Dämpfungskraftcharakteristik der Hydraulikflüssigkeit, die aus der zweiten in die erste Hydraulikkammer durch die andere Drosselstelle fließt, festgelegt sind, voneinander verschieden zu sein, wobei S1 und S2 Kolbenhübe der ersten und zweiten Hydraulikzylinder (1, 11) sind, a1 und a2 Querschnittsflächen der Kolbenstangen (4, 14) der ersten und zweiten Hydraulikzylinder (1, 11) sind, $\lambda$1 und $\lambda$2 Größen der vertikalen Verlagerung des Vorder- und Hinterrades (51, 52) an bodenberührenden Punkten für die Kolbenhübe S1 und S2 der ersten und zweiten Hydraulikzylinder (1,11) sind.

## Revendications

1.  Dispositif de suspension pour un véhicule à deux roues, en particulier une motocyclette, comprenant un premier et un second cylindre hydraulique (1, 11) servant à suspendre respectivement des roues avant et arrière munies de pistons (4, 14) raccordés à une extrémité de tiges de pistons (3, 13) insérée dans les cylindres hydrauliques (4, 14), et un dispositif de régulation de pression (20) avec un premier et un second cylindre de régulation de pression (21, 31) comportant des chambres hydrauliques (23, 33) communiquant respectivement avec l'un desdits cylindres hydrauliques (1, 11), un passage de communication (26) pour établir la communication entre lesdites chambres hydrauliques (23, 33) et au moins une cloison de séparation mobile (22, 32), dans lequel le premier et le second cylindre de régulation de pression (21, 31) comprennent chacun un piston libre coulissant (22, 32) comme cloison de séparation, et une première chambre hydraulique (23) est formée par le premier cylindre de régulation de pression (21) et la cloison de séparation mobile respective (22) et une seconde chambre hydraulique (33) est formée par le second cylindre de régulation de pression (31) et la cloison de séparation mobile respective (32), et dans lequel au moins l'une quelconque des relations

$$a1 \neq a2 \text{ et } S1/\lambda 1 \neq S2/\lambda 2$$

est remplie et la relation

$$(S1/\lambda 1) \times (a1/A1) \approx (S2/\lambda 2) \times (a2/A2)$$

s'applique,
dans lequel S1 et S2 sont les courses de pistons desdits premier et second cylindres hydrauliques, a1 et a2 sont les aires des sections des tiges de pistons, $\lambda 1$ et $\lambda 2$ sont les quantités de déplacement vertical des roues avant et arrière aux points de terre pour les courses de pistons S1 et S2 des premier et second cylindres hydrauliques, et A1 et A2 sont les aires de section effectives desdits premier et second cylindres de régulation de pression.

2. Dispositif de suspension pour un véhicule à deux roues selon la revendication 1, dans lequel le passage de communication (26) comprend un premier et un second dispositif d'étranglement (27, 37), dans lequel le premier dispositif d'étranglement (27) fournit un écoulement de liquide hydraulique entre la première (23) et la seconde (33) chambre hydraulique et le second dispositif d'étranglement (37) fournit un écoulement de liquide hydraulique entre la seconde (33) et la première (23) chambre hydraulique.

3. Dispositif de suspension pour un véhicule à deux roues selon la revendication 1 ou 2, dans lequel les aires de section effectives (A1, A2) des premier et second cylindres de régulation de pression (21, 31) sont réglées à des valeurs différentes.

4. Dispositif de suspension pour un véhicule à deux roues selon au moins l'une quelconque des revendications précédentes 1 à 3, dans lequel un rapport d'une quantité de déplacement vertical des roues avant et arrière (52, 53) sur les courses de pistons des cylindres hydrauliques respectifs (1, 11) est réglé à des valeurs différentes.

5. Dispositif de suspension pour un véhicule à deux roues selon au moins l'une quelconque des revendications précédentes 1 à 4, dans lequel les pistons libres (22, 32) sont raccordés par un élément de raccordement (25) de telle sorte que les variations de volume des dites première et seconde chambres hydrauliques (23, 33) s'accordent les unes aux autres.

6. Dispositif de suspension pour un véhicule à deux roues selon au moins l'une quelconque des revendications précédentes 1 à 5, dans lequel une chambre de gaz mutuelle (28) est formée dans les premier et second cylindres de régulation de pression (21, 31), dans lequel la chambre de gaz mutuelle (28) contient un gaz inerte.

7. Dispositif de suspension pour un véhicule à deux roues selon au moins l'une quelconque des revendications précédentes 1 à 6, dans lequel les valeurs absolues d'une vitesse de déplacement des roues avant et arrière (51, 52) sont réglées pour être égales et la relation

$$(S1/\lambda 1) \times (a1/A1) \times \Delta \Phi \approx (S2/\lambda 2) \times (a2/A2) \times \Delta$$

s'applique,

dans lequel $\Delta \Phi$ est une différence de pression entre les chambres hydrauliques lorsqu'un liquide hydraulique s'écoule depuis la première chambre hydraulique vers la seconde chambre hydraulique, $\Delta \Phi'$ est une différence de pression entre les chambres hydrauliques lorsqu'un liquide hydraulique s'écoule depuis la seconde chambre hydraulique vers la première chambre hydraulique.

8. Dispositif de suspension pour un véhicule à deux roues selon la revendication 7, dans lequel au moins une valeur d'une paire de valeurs de a1 et a2, S1/$\lambda 1$ et S2/$\lambda 2$, et une caractéristique de la force d'amortissement du liquide hydraulique s'écoulant depuis la première chambre hydraulique vers la seconde chambre hydraulique à travers un dispositif d'étranglement et une caractéristique de la force d'amortissement du liquide hydraulique s'écoulant depuis la seconde chambre hydraulique vers la première chambre hydraulique à travers l'autre dispositif d'étranglement est réglée pour être différente de l'autre, dans lequel S1 et S2 sont les courses de pistons desdits premier et second cylindres hydrauliques (1, 11), a1 et a2 sont les aires de section des tiges de pistons (4, 14) desdits premier et second cylindres hydrauliques (1, 11), $\lambda 1$ et $\lambda 2$ sont les quantités de déplacement vertical des roues avant et arrière (51, 52) aux points de terre pour les courses de pistons S1 et S2 des premier et second cylindres hydrauliques (1, 11).

FIGURE 1

FIGURE 2

70

71

FIGURE 3

FIGURE 4

**EP 1 213 218 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8132846 A

- JP 2000003385 A